# EUROPEAN PATENT APPLICATION

(11) **EP 4 534 579 A1**
(43) Date of publication of application: **09.04.2025**
(21) Application number: 23811748.5
(22) Date of filing: 19.05.2023
(51) Int. Cl.: C08G 18/75, C08G 18/44, C08G 18/65

(54) **THERMOPLASTIC POLYURETHANE RESIN, FILM AND COATING PROTECTION FILM**

(30) Priority: 27.05.2022 JP 2022086653
(71) Applicant: Mitsui Chemicals, Inc., Tokyo 104-0028 (JP)
(72) Inventor: KUROIWA, Satoshi, Sodegaura-shi, Chiba 299-0265 (JP); KOBAYASHI, Takeshi, Sodegaura-shi, Chiba 299-0265 (JP)
(74) Representative: Hoffmann Eitle
(86) International application number: PCT/JP2023/018705
(87) International publication number: WO 2023/228876

(57) **Abstract**

A thermoplastic polyurethane resin contains a reaction product of a polyisocyanate component and a polyol component. The polyisocyanate component contains a 1,4-bis(isocyanatomethyl)cyclohexane and a 1,3-bis(isocyanatomethyl) cyclohexane. The polyol component contains a polycarbonate polyol and a low molecular-weight polyol. The polycarbonate polyol includes a crystalline polycarbonate polyol that is in a solid state at 25°C. With respect to the total amount of the 1,4-bis(isocyanatomethyl) cyclohexane and the 1,3-bis(isocyanatomethyl) cyclohexane, the 1,4-bis(isocyanatomethyl)cyclohexane is 50 to 90 mol%, and the 1,3-bis(isocyanatomethyl) cyclohexane is 10 to 50 mol%.

## Description

### TECHNICAL FIELD

The present invention relates to a thermoplastic polyurethane resin, a film, and a paint protection film.

### BACKGROUND ART

Thermoplastic polyurethane resin (TPU) generally is obtained by a reaction of a polyisocyanate, a macropolyol, and a low molecular-weight polyol. Thermoplastic polyurethane resin is, for example, formed into the shape of a film. A film-shaped thermoplastic polyurethane resin is used as a base film in a paint protection film (a Paint Protection Film (PPF), a laminate film) for protecting the paint surface of an automobile.

As the base film of a paint protection film (PPF), for example, the following film has been known. The film contains a thermoplastic polyurethane resin. The thermoplastic polyurethane resin contains a reaction product of a polyisocyanate component and a polyol component. The polyisocyanate component contains a 1,4-bis(isocyanatomethyl) cyclohexane. The polyol component contains an amorphous polycaproctone diol that is in a liquid state at 25°C and a low molecular-weight diol having 2 to 6 carbon atoms (for example, see Patent Document 1).

Such a film has excellent stretchability (restoring force) and heat resistance.

### Citation List

### Patent Document

Patent Document 1: WO2019/069802

### SUMMARY OF THE INVENTION

### PROBLEM TO BE SOLVED BY THE INVENTION

Meanwhile, the film is further required to have the restorability from a left finger mark (finger mark rebound resilience). In light thereof, the above-described film may not have sufficient finger mark rebound resilience.

The present invention provides a thermoplastic polyurethane resin having stretchability (restoring force), heat resistance, and finger mark rebound resilience simultaneously, and also provides a film and a paint protection film that contain the thermoplastic polyurethane resin.

### MEANS FOR SOLVING THE PROBLEM

The present invention [1] includes a thermoplastic polyurethane resin including: a reaction product of a polyisocyanate component and a polyol component, wherein the polyisocyanate component contains: a 1,4-bis(isocyanatomethyl)cyclohexane, and a 1,3-bis(isocyanatomethyl) cyclohexane, wherein the polyol component contains a polycarbonate polyol and a low molecular-weight polyol, wherein the polycarbonate polyol includes a crystalline polycarbonate polyol that is in a solid state at 25°C, wherein with respect to a total amount of the 1,4-bis(isocyanatomethyl) cyclohexane and the 1,3-bis(isocyanatomethyl) cyclohexane, a ratio of the 1,4-bis(isocyanatomethyl) cyclohexane is 50 mol% or more and 90 mol% or less, and a ratio of the 1,3-bis(isocyanatomethyl) cyclohexane is 10 mol% or more and 50 mol% or less.

The present invention [2] includes the thermoplastic polyurethane resin described in the above-described [1], wherein the polycarbonate polyol consists of the crystalline polycarbonate polyol.

The present invention [3] includes the thermoplastic polyurethane resin described in the above-described [1] or [2], wherein the thermoplastic polyurethane resin has a hard segment concentration of 18% by mass or more and 35% by mass or less.

The present invention [4] includes the thermoplastic polyurethane resin described in any one of the above-described [1] to [3], wherein the polycarbonate polyol contains: a first polycarbonate polyol having a number average molecular weight of 1200 or less, and a second polycarbonate polyol having a number average molecular weight of 1800 or more.

The present invention [5] includes a film including: the thermoplastic polyurethane resin compound described in any one of the above-described [1] to [4].

The present invention [6] includes a paint protection film including: a peelable layer; a pressure-sensitive adhesive layer disposed at least on a one-side surface of the peelable layer; and a base film layer disposed at least on a one-side surface of the pressure-sensitive adhesive layer, wherein the base film layer contains the film described in the above-described [5].

### EFFECTS OF THE INVENTION

The raw material component of the thermoplastic polyurethane resin of the present invention contains a 1,4-bis(isocyanatomethyl) cyclohexane in a predetermined ratio, a crystalline polycarbonate polyol, and a polyol component containing a low molecular-weight polyol.

The 1,4-bis(isocyanatomethyl) cyclohexane has a relatively high crystallinity. Furthermore, the low molecular-weight polyol forms hard segments and improves the crystallinity. Furthermore, the crystalline polycarbonate polyol has a relatively high crystallinity.

Furthermore, the raw material component contains a 1,3-bis(isocyanatomethyl) cyclohexane. The 1,3-bis(isocyanatomethyl) cyclohexane has a relatively low crystallinity.

In addition, in the raw material component, the ratio of the 1,4-bis(isocyanatomethyl) cyclohexane to the 1,3-bis(isocyanatomethyl) cyclohexane is adjusted into a predetermined range.

In other words, the crystallinity of the polyurethane structure is adjusted by the raw material component. In this manner, the thermoplastic polyurethane resin has stretchability (restoring force), heat resistance, and finger mark rebound resilience in a good balance therebetween.

Furthermore, the film and paint protection film of the present invention contain the above-described thermoplastic polyurethane resin, and thus have finger mark rebound resilience, stretchability (restoring force), and heat resistance in a good balance therebetween.

### DESCRIPTION OF THE EMBODIMENTS

The thermoplastic polyurethane resin of the present invention is obtained by a reaction of a polyisocyanate component with a polyol component. In other words, the thermoplastic polyurethane resin is a reaction product of a polyisocyanate component and a polyol component.

### 1. Polyisocyanate Component

### (1) Bis(isocyanatomethyl) Cyclohexane

The polyisocyanate component contains a bis(isocyanatomethyl) cyclohexane (H₆XDI) as an essential component. The bis(isocyanatomethyl) cyclohexane contains a 1,4-bis(isocyanatomethyl) cyclohexane and a 1,3-bis(isocyanatomethyl) cyclohexane.

The 1,4-bis(isocyanatomethyl) cyclohexane (1,4-H₆XDI) has a stereoisomer. Examples of the stereoisomer include a cis-1,4-bis(isocyanatomethyl) cyclohexane (hereinafter a cis-1,4 isomer) and a trans-1,4-bis(isocyanatomethyl) cyclohexane (hereinafter, a trans-1,4 isomer).

The 1,4-bis(isocyanatomethyl) cyclohexane contains, for example, a trans-1,4 isomer (trans-isomer) and a cis-1,4 isomer (cis-isomer). The total amount of the trans-1,4 isomer and the cis-1,4 isomer is 100 mol%.

With respect to the total mol of the 1,4-bis(isocyanatomethyl) cyclohexane, the content ratio of the trans-1,4 isomer (trans-isomer) is, for example, 60 mol% or more, preferably 70 mol% or more, more preferably 75 mol% or more, even more preferably 80 mol% or more. Furthermore, with respect to the total mol of the 1,4-bis(isocyanatomethyl) cyclohexane, the content ratio of the trans-1,4 isomer (trans-isomer) is, for example, 99.5 mol% or less, preferably 99 mol% or less, more preferably 96 mol% or less, even more preferably 90 mol% or less.

In other words, with respect to the total mol of the 1,4-bis(isocyanatomethyl) cyclohexane, the content ratio of the cis-1,4 isomer (cis-isomer) is, for example, 0.5 mol% or more, preferably 1 mol% or more, more preferably 4 mol% or more, even more preferably 10 mol% or more. Furthermore, with respect to the total mol of the 1,4-bis(isocyanatomethyl) cyclohexane, the content ratio of the cis-1,4 isomer (cis-isomer) is, for example, 40 mol% or less, preferably 30 mol% or less, more preferably 25 mol% or less, even more preferably 20 mol% or less.

The 1,4-bis(isocyanatomethyl) cyclohexane is produced by a known method. The method of producing the 1,4-bis(isocyanatomethyl) cyclohexane is described, for example, in WO2009/051114 and WO2019/069802.

The 1,4-bis(isocyanatomethyl) cyclohexane may be a monomer or a modified product. Examples of the modified product include a urethodione modified product, an isocyanurate modified product, iminooxadiazinedione, a biuret modified product, an allophanate modified product, a polyol adduct, an oxadiazinetrione modified product, and a carbodiimide modified product. These can be used alone or in combination of two or more. The 1,4-bis(isocyanatomethyl) cyclohexane is preferably a monomer.

The 1,3-bis(isocyanatomethyl) cyclohexane (1,3-H₆XDI) is not especially limited, and a known 1,3-bis(isocyanatomethyl) cyclohexane is used.

The 1,3-bis(isocyanatomethyl) cyclohexane may be a monomer or a modified product. Examples of the modified product include a urethodione modified product, an isocyanurate modified product, iminooxadiazinedione, a biuret modified product, an allophanate modified product, a polyol adduct, an oxadiazinetrione modified product, and a carbodiimide modified product. These can be used alone or in combination of two or more. The 1,3-bis(isocyanatomethyl) cyclohexane is preferably a monomer.

To improve the stretchability (restoring force), heat resistance, and finger mark rebound resilience of the thermoplastic polyurethane resin in a good balance, the 1,4-bis(isocyanatomethyl) cyclohexane and 1,3-bis(isocyanatomethyl) cyclohexane are used in combination in a predetermined ratio.

More specifically, with respect to the total amount of the 1,4-bis(isocyanatomethyl) cyclohexane and the 1,3-bis(isocyanatomethyl) cyclohexane, the ratio of the 1,4-bis(isocyanatomethyl) cyclohexane is 50 mol% or more, preferably 55 mol% or more, more preferably 60 mol% or more, even more preferably 65 mol% or more. Furthermore, with respect to the total amount of the 1,4-bis(isocyanatomethyl) cyclohexane and the 1,3-bis(isocyanatomethyl) cyclohexane, the ratio of the 1,4-bis(isocyanatomethyl) cyclohexane is 90 mol% or less, preferably 85 mol% or less, more preferably 80 mol% or less, even more preferably 75 mol% or less.

Furthermore, with respect to the total amount of the 1,4-bis(isocyanatomethyl) cyclohexane and the 1,3-bis(isocyanatomethyl) cyclohexane, the ratio of the 1,3-bis(isocyanatomethyl) cyclohexane is 10 mol% or more, preferably 15 mol% or more, more preferably 20 mol% or more, even more preferably 25 mol% or more. Furthermore, with respect to the total amount of the 1,4-bis(isocyanatomethyl) cyclohexane and the 1,3-bis(isocyanatomethyl) cyclohexane, the ratio of the 1,3-bis(isocyanatomethyl) cyclohexane is 50 mol% or less, preferably 45 mol% or less, more preferably 40 mol% or less, even more preferably 35 mol% or less.

### (2) Another Polyisocyanate

The polyisocyanate component can contain another polyisocyanate as an optional component. The other polyisocyanate is a polyisocyanate except bis(isocyanatomethyl) cyclohexane.

Examples of the other polyisocyanate include an aliphatic polyisocyanate, an alicyclic polyisocyanate (except bis(isocyanatomethyl) cyclohexane), an aromatic polyisocyanate, and an araliphatic polyisocyanate.

Examples of the aliphatic polyisocyanate include a pentamethylene diisocyanate (PDI) and a hexamethylene diisocyanate (HDI). Examples of the alicyclic polyisocyanate include an isophorone diisocyanate (IPDI), a norbornene diisocyanate (NBDI), and a methylene bis(cyclohexyl isocyanate) (H₁₂MDI). Examples of the aromatic polyisocyanate include a tolylene diisocyanate (TDI), a diphenylmethane diisocyanate (MDI), a toluidine diisocyanate (TODI), and a naphthalene diisocyanate (NDI). Examples of the araliphatic polyisocyanate include a xylylene diisocyanate (XDI) and a tetramethyl xylylene diisocyanate (TMXDI). Furthermore, the other polyisocyanate may be a monomer or the above-described modified product. These can be used alone or in combination of two or more.

The content ratio of the other polyisocyanate with respect to the total amount of the polyisocyanate component is, for example, 50% by mass or less, preferably 30% by mass or less, more preferably 10% by mass or less, particularly preferably 0% by mass.

In other words, the content ratio of the bis(isocyanatomethyl) cyclohexane with respect to the total amount of the polyisocyanate component is, for example, 50% by mass or more, preferably 70% by mass or more, more preferably 90% by mass or more, particularly preferably 100% by mass. In other words, the polyisocyanate component preferably consists of a bis(isocyanatomethyl) cyclohexane, more preferably consists of a 1,3-bis(isocyanatomethyl) cyclohexane and a 1,4-bis(isocyanatomethyl) cyclohexane.

### 2. Polyol Component

The polyol component contains a macropolyol and a low molecular-weight polyol. The polyol component preferably consists of a macropolyol and a low molecular-weight polyol.

### (1) Macropolyol

The macropolyol is an organic compound having two or more hydroxyl groups in its molecule and having a relatively high molecular weight. A relatively high molecular weight indicates that the number average molecular weight exceeds 400.

The macropolyol includes a polycarbonate polyol as an essential component. The polycarbonate polyol includes a crystalline polycarbonate polyol as an essential component.

The crystalline polycarbonate polyol is a polycarbonate polyol that is in a solid state at 25°C. The solid state indicates a state in which the viscosity at 25°C measured with an E-type viscometer exceeds 500000 mPa·s.

Examples of the crystalline polycarbonate polyol include a ring-opening polymer of ethylene carbonate using a polyhydric alcohol as an initiator. Examples of the polyhydric alcohol as an initiator include a dihydric alcohol having 2 to 8 carbon atoms and a trihydric alcohol having 2 to 8 carbon atoms. Examples of the dihydric alcohol having 2 to 8 carbon atoms include an ethylene glycol, a 1,3-propanediol, a 1, 4-butanediol, a 1,5-pentanediol, a 1,6-hexanediol, a 1,8-octanediol, a diethylene glycol, and a triethylene glycol. Examples of the trihydric alcohol having 2 to 8 carbon atoms include a glycerin, a trimethylolethane, and a trimethylolpropane. These can be used alone or in combination of two or more. As the polyhydric alcohol, preferably, a dihydric alcohol is used.

The method of ring-opening polymerization of ethylene carbonate using a polyhydric alcohol is not especially limited, and a known method is used.

The crystalline polycarbonate polyol has a number average molecular weight (molecular weight in terms of polystyrene) of more than 400, preferably 500 or more, more preferably 1000 or more. Furthermore, the crystalline polycarbonate polyol has a number average molecular weight (molecular weight in terms of polystyrene) of, for example, 10000 or less, preferably 8000 or less, more preferably 5000 or less, even more preferably 3000 or less, particularly preferably 2000 or less.

The average number of hydroxyl groups of the crystalline polycarbonate polyol is, for example, 1.8 or more, preferably 2 or more. Furthermore, the average number of hydroxyl groups of the crystalline polycarbonate polyol is, for example, 4 or less, preferably 3 or less, more preferably 2 or less. The average number of hydroxyl groups of the crystalline polycarbonate polyol is particularly preferably 2. In other words, as the crystalline polycarbonate polyol, particularly preferably, a crystalline polycarbonate diol is used.

The polycarbonate polyol can contain an amorphous polycarbonate polyol as an optional component.

The amorphous polycarbonate polyol is a polycarbonate polyol that is in a liquid state at 25°C. The liquid state indicates a state in which the viscosity at 25°C measured with an E-type viscometer is 500000 mPa·s or less.

The amorphous polycarbonate polyol can be obtained, for example, by modifying the above-described crystalline polycarbonate polyol with a polyhydric alcohol as a modifier. Examples of the polyhydric alcohol as a modifier include a dihydric alcohol having 4 to 10 carbon atoms. Examples of the dihydric alcohol having 4 to 10 carbon atoms include a 1, 4-butanediol, a 1,5-pentanediol, a 1,6-hexanediol, a 1,8-octanediol, a 1,9-nonanediol, a 1,10-decanediol, a 3-methyl-1,5-pentanediol, a 2-methyl-1,3-propanediol, and a 2,2-dimethyl-1,3-propanediol. These can be used alone or in combination of two or more.

The method of modifying a ring-opening polymer of ethylene carbonate with a dihydric alcohol is not especially limited, and a known method is used. For example, after ring-opening polymerization of the ethylene carbonate using a dihydric alcohol as an initiator in a known method, the produced ring-opening polymer and the dihydric alcohol as a modifier are further copolymerized.

The amorphous polycarbonate polyol has a number average molecular weight (molecular weight in terms of polystyrene) of more than 400, preferably 500 or more, more preferably 1000 or more. Furthermore, the amorphous polycarbonate polyol has a number average molecular weight (molecular weight in terms of polystyrene) of, for example, 10000 or less, preferably 8000 or less, more preferably 5000 or less, even more preferably 3000 or less, particularly preferably 2000 or less.

The average number of hydroxyl groups of the amorphous polycarbonate polyol is, for example, 1.8 or more, preferably 2 or more. Furthermore, the average number of hydroxyl groups of the amorphous polycarbonate polyol is, for example, 4 or less, preferably 3 or less, more preferably 2 or less. The average number of hydroxyl groups of the amorphous polycarbonate polyol is particularly preferably 2. **In** other words, as the amorphous polycarbonate polyol, particularly preferably, an amorphous polycaproctone diol is used.

The content ratio of the amorphous polycarbonate polyol is, for example, 50 mol% or less, preferably 40 mol% or less, more preferably 30 mol% or less, even more preferably 20 mol% or less, even more preferably 10 mol% or less, particularly preferably 0 mol% with respect to the total amount of the polycarbonate polyol (the total amount of the crystalline polycarbonate polyol and the amorphous polycarbonate polyol).

In other words, the content ratio of the crystalline polycarbonate polyol is, for example, 50 mol% or more, preferably 60 mol% or more, more preferably 70 mol% or more, even more preferably 80 mol% or more, even more preferably 90 mol% or more, particularly preferably 100 mol% with respect to the total amount of the polycarbonate polyol (the total amount of the crystalline polycarbonate polyol and the amorphous polycarbonate polyol). That is to say, the polycarbonate polyol preferably consists of the crystalline polycarbonate polyol.

The polycarbonate polyol has a number average molecular weight (molecular weight in terms of polystyrene) of more than 400, preferably 500 or more, more preferably 1000 or more. Furthermore, the polycarbonate polyol has a number average molecular weight (molecular weight in terms of polystyrene) of, for example, 10000 or less, preferably 8000 or less, more preferably 5000 or less, even more preferably 3000 or less, particularly preferably 2000 or less.

The average number of hydroxyl groups of the polycarbonate polyol is, for example, 1.8 or more, preferably 2 or more. Furthermore, the average number of hydroxyl groups of the polycarbonate polyol is, for example, 4 or less, preferably 3 or less, more preferably 2 or less. The average number of hydroxyl groups of the polycarbonate polyol is particularly preferably 2. In other words, as the polycarbonate polyol, particularly preferably, a polycarbonate diol is used.

These polycarbonate polyols can be used alone or in combination of two or more. Preferably, the polycarbonate polyols are used in combination of two or more. That is to say, in view of improving the stretchability (restoring force), heat resistance, and finger mark rebound resilience of the thermoplastic polyurethane resin in a good balance, preferably, two or more polycarbonate polyols are used in combination.

More specifically, the polycarbonate polyol contains a first polycarbonate polyol having a number average molecular weight of 1200 or less and a second polycarbonate polyol having a number average molecular weight of 1800 or more.

Examples of the first polycarbonate polyol include the above-described crystalline polycarbonate polyol and the above-described amorphous polycarbonate polyol. As the first polycarbonate polyol, in view of improving the stretchability (restoring force), heat resistance, and finger mark rebound resilience of the thermoplastic polyurethane resin in a good balance, preferably, the above-described crystalline polycarbonate polyol is used.

The first polycarbonate polyol has a number average molecular weight of more than 400, preferably 500 or more, more preferably 1000 or more. Furthermore, the first polycarbonate polyol has a number average molecular weight of 1200 or less, preferably 1150 or less, more preferably 1100 or less, even more preferably 1050 or less.

Examples of the second polycarbonate polyol include the above-described crystalline polycarbonate polyol and the above-described amorphous polycarbonate polyol. As the second polycarbonate polyol, in view of improving the stretchability (restoring force), heat resistance, and finger mark rebound resilience of the thermoplastic polyurethane resin in a good balance, preferably, the above-described crystalline polycarbonate polyol is used.

The second polycarbonate polyol has a number average molecular weight of 1800 or more, preferably 1850 or more, more preferably 1900 or more, even more preferably 1950 or more. Furthermore, the second polycarbonate polyol has a number average molecular weight (molecular weight in terms of polystyrene) of, for example, 10000 or less, preferably 8000 or less, more preferably 5000 or less, even more preferably 3000 or less, particularly preferably 2000 or less.

For example, the polycarbonate polyol may only contain the first polycarbonate polyol. Furthermore, for example, the polycarbonate polyol may only contain the second polycarbonate polyol. Preferably, the polycarbonate polyol contains the first polycarbonate polyol and the second polycarbonate polyol. When the polycarbonate polyol contains the first polycarbonate polyol and the second polycarbonate polyol, the content ratios of them are appropriately set depending on the purpose and use.

For example, with respect to the total mol of the first polycarbonate polyol and the second polycarbonate polyol, the first polycarbonate polyol is, for example, more than 0 mol%, preferably 40 mol% or more. Furthermore, with respect to the total mol of the first polycarbonate polyol and the second polycarbonate polyol, the first polycarbonate polyol is, for example, less than 100 mol%, preferably 60 mol% or less.

Furthermore, with respect to the total mol of the first polycarbonate polyol and the second polycarbonate polyol, the second polycarbonate polyol is, for example, more than 0 mol%, preferably 40 mol% or more. Furthermore, with respect to the total mol of the first polycarbonate polyol and the second polycarbonate polyol, the second polycarbonate polyol is, for example, less than 100 mol%, preferably 60 mol% or less.

The macropolyol contains another macropolyol as an optional component. The other macropolyol is a macropolyol except a polycarbonate polyol.

Examples of the other macropolyol include a polyether polyol, a polyester polyol, a polyurethane polyol, an epoxy polyol, a vegetable oil polyol, a polyolefin polyol, an acrylic polyol, and a vinyl monomer-modified polyol. These can be used alone or in combination of two or more.

The content ratio of the other macropolyol with respect to the total amount of the macropolyol is, for example, 50% by mass or less, preferably 30% by mass or less, more preferably 10% by mass or less, particularly preferably 0% by mass.

That is to say, the content ratio of the polycarbonate polyol with respect to the total amount of the macropolyol is, for example, 50% by mass or more, preferably 70% by mass or more, more preferably 90% by mass or more, particularly preferably 100% by mass. In other words, the macropolyol particularly preferably consists of the polycarbonate polyol.

The macropolyol has a number average molecular weight (molecular weight in terms of polystyrene) of more than 400, preferably 500 or more, more preferably 1000 or more. Furthermore, the macropolyol has a number average molecular weight (molecular weight in terms of polystyrene) is, for example, 10000 or less, preferably 8000 or less, more preferably 5000 or less, even more preferably 3000 or less, particularly preferably 2000 or less.

The content ratio of the macropolyol with respect to the total amount of the macropolyol and the low molecular-weight polyol is, for example, 10 mol% or more, preferably 20 mol% or more, more preferably 30 mol% or more. Furthermore, the content ratio of the macropolyol with respect to the total amount of the macropolyol and the low molecular-weight polyol is, for example, 95 mol% or less, preferably 70 mol% or less, more preferably 50 mol% or less.

### (2) Low Molecular-weight Polyol

The low molecular-weight polyol is an organic compound having two or more hydroxyl groups in its molecule and having a relatively low molecular weight. The relatively low molecular weight indicates that the number average molecular weight is 400 or less.

The low molecular-weight polyol contains, for example, a low molecular-weight diol having 2 to 6 carbon atoms. The low molecular-weight diol having 2 to 6 carbon atoms is a compound having 2 or more and 6 or less carbon atoms in one molecule, and having 2 hydroxyl groups in one molecule, and having a molecular weight of 400 or less.

Examples of the low molecular-weight diol having 2 to 6 carbon atoms include an alkane diol having 2 to 6 carbon atoms, an ether diol having 2 to 6 carbon atoms, and an alkene diol having 2 to 6 carbon atoms. Examples of the alkane diol having 2 to 6 carbon atoms include an ethylene glycol, a propylene glycol, a 1,3-propanediol, a 1, 4-butanediol (1,4-BD), a 1,3-butanediol, a 1,2-butanediol, a 1,5-pentanediol, a 1,6-hexanediol, a neopentyl glycol, a 3-methyl-1,5-pentanediol, and a 2,2-dimethyl-1,3-propanediol. Examples of the ether diol having 2 to 6 carbon atoms include a diethylene glycol, a triethylene glycol, and a dipropylene glycol. Examples of the alkene diol having 2 to 6 carbon atoms include 1,4-dihydroxy-2-butene. These can be used alone or in combination of two or more.

The number of carbon atoms of the low molecular-weight diol having 2 to 6 carbon atoms is 2 or more, preferably 3 or more. Furthermore, the number of carbon atoms of the low molecular-weight diol having 2 to 6 carbon atoms is 6 or less, preferably 5 or less. The number of carbon atoms of the low molecular-weight diol having 2 to 6 carbon atoms is particularly preferably 4.

As the low molecular-weight diol having 2 to 6 carbon atoms, preferably an alkane diol having 2 to 6 carbon atoms is used, more preferably a 1, 4-butanediol is used.

As necessary, the low molecular-weight polyol can contain another low molecular-weight polyol. The other low molecular-weight polyol is a low molecular-weight polyol except a low molecular-weight diol having 2 to 6 carbon atoms. Examples of the other low molecular-weight polyol include a low molecular-weight diol having 7 or more carbon atoms and a trivalent or more low molecular-weight polyol. These can be used alone or in combination of two or more.

The content ratio of the other low molecular-weight polyol with respect to the total amount of the low molecular-weight polyol is, for example, 50% by mass or less, preferably 30% by mass or less, more preferably 10% by mass or less, particularly preferably 0% by mass.

That is to say, the content ratio of the low molecular-weight diol having 2 to 6 carbon atoms with respect to the total amount of the low molecular-weight polyol is, for example, 50% by mass or more, preferably 70% by mass or more, more preferably 90% by mass or more, particularly preferably 100% by mass. In other words, the low molecular-weight polyol particularly preferably consists of a low molecular-weight diol having 2 to 6 carbon atoms.

The low molecular-weight polyol has a molecular weight of, for example, 30 or more, preferably 70 or more. Furthermore, the low molecular-weight polyol has a molecular weight of 400 or less, preferably 300 or less.

The content ratio of the low molecular-weight polyol is appropriately set depending on the purpose and use. Preferably, the content ratio of the low molecular-weight polyol is appropriately set so that the hard segment concentration described below is in a desired range.

For example, the content ratio of the low molecular-weight polyol with respect to the total amount of the macropolyol and the low molecular-weight polyol is, for example, 5 mol% or more, preferably 30 mol% or more, more preferably 50 mol% or more. Furthermore, the content ratio of the low molecular-weight polyol with respect to the total amount of the macropolyol and the low molecular-weight polyol is, for example, 90 mol% or less, preferably 80 mol% or less, more preferably 70 mol% or less.

### 3. Thermoplastic Polyurethane Resin

The thermoplastic polyurethane resin is, as described above, a reaction product of the polyisocyanate component and the polyol component as a raw material component. In other words, the thermoplastic polyurethane resin is produced by a reaction between the polyisocyanate component and the polyol component (reaction step).

In the reaction step, as the method of allowing the polyisocyanate component to react with the polyol component, a known method is used. Examples of the reaction method include a one shot method and a prepolymer method.

In a one shot method, for example, the polyisocyanate component and the polyol component are reacted at a time. In a prepolymer method, for example, first, the polyisocyanate component is reacted with a macropolyol to synthesize an isocyanate group-terminated prepolymer. Next, the isocyanate group-terminated prepolymer is reacted with a low molecular-weight polyol. In view of improving each physical property, preferably, a prepolymer method is used.

In a prepolymer method, first, the polyisocyanate component is reacted with a macropolyol to synthesize an isocyanate group-terminated prepolymer (prepolymer synthesizing step).

In the prepolymer synthesizing step, the polyisocyanate component and the macropolyol are mixed in a predetermined ratio. The mixing ratio is adjusted based on the equivalent ratio (isocyanate group/hydroxyl group) of the isocyanate group in the polyisocyanate component with respect to the hydroxyl group in the macropolyol.

That is to say, the equivalent ratio (isocyanate group/hydroxyl group) of the isocyanate group in the polyisocyanate component with respect to the hydroxyl group of the macropolyol is, for example, 1.3 or more, preferably 1.5 or more. Furthermore, the equivalent ratio (isocyanate group/hydroxyl group) of the isocyanate group in the polyisocyanate component with respect to the hydroxyl group of the macropolyol is, for example, 20 or less, preferably 15 or less, more preferably 10 or less, even more preferably 8 or less.

Based on mass, with respect to 100 parts by mass of the macropolyol, the polyisocyanate component is, for example, 5 parts by mass or more, preferably 10 parts by mass or more, more preferably 15 parts by mass or more. Furthermore, with respect to 100 parts by mass of the macropolyol, the polyisocyanate component is, for example, 150 parts by mass or less, preferably 100 parts by mass or less, more preferably 90 parts by mass or less.

In the prepolymer synthesizing step, the method of allowing the polyisocyanate component to react with the macropolyol is not especially limited. Examples of the reaction method include a bulk polymerization and a solution polymerization.

In the bulk polymerization, for example, the polyisocyanate component and the macropolyol are reacted under a nitrogen gas stream. The reaction temperature is, for example, 50°C or more. Furthermore, the reaction temperature is, for example, 250°C or less, preferably 200°C or less. Furthermore, the reaction time is, for example, 0.5 hours or more, preferably 1 hour or more. Furthermore, the reaction time is, for example, 48 hours or less, preferably 24 hours or less.

In the solution polymerization, the polyisocyanate component and the macropolyol are reacted in the presence of a known organic solvent. The reaction temperature is, for example, 50°C or more. Furthermore, the reaction temperature is, for example, 120°C or less, preferably 100°C or less. Furthermore, the reaction time is, for example, 0.5 hours or more, preferably, 1 hour or more. Furthermore, the reaction time is, for example, 48 hours or less, preferably 24 hours or less.

In this manner, as a reaction mixture of the polyisocyanate component and the macropolyol, an isocyanate group-terminated prepolymer is produced.

In the prepolymer synthesizing step, as necessary, a known urethane-forming catalyst may be mixed. The mixing ratio of the urethane-forming catalyst is appropriately set depending on the purpose and use.

Furthermore, in the prepolymer synthesizing step, as necessary, the isocyanate group-terminated prepolymer may be purified by a known method. Examples of the purification method include distillation and extraction.

Next, in this method, the above-described isocyanate group-terminated prepolymer is reacted with a low molecular-weight polyol to produce a thermoplastic polyurethane resin (chain extending step).

In the chain extending step, the isocyanate group-terminated prepolymer and the low molecular-weight polyol are mixed in a predetermined ratio. The mixing ratio is adjusted based on the equivalent ratio (isocyanate group/hydroxyl group) of the isocyanate group in the isocyanate group-terminated prepolymer with respect to the hydroxyl group in the low molecular-weight polyol.

That is to say, with respect to the hydroxyl group in the low molecular-weight polyol, the equivalent ratio (isocyanate group/hydroxyl group) of the isocyanate group in the isocyanate group-terminated prepolymer is, for example, 0.75 or more, preferably 0.9 or more. Furthermore, with respect to the hydroxyl group in the low molecular-weight polyol, the equivalent ratio (isocyanate group/hydroxyl group) of the isocyanate group in the isocyanate group-terminated prepolymer is, for example, 1.3 or less, preferably 1.1 or less.

Based on mass, with respect to 100 parts by mass of the isocyanate group-terminated prepolymer, the low molecular-weight polyol is, for example, 1.0 part by mass or more, preferably 2.5 parts by mass or more, more preferably 3.5 parts by mass or more, even more preferably 4.5 parts by mass or more, particularly preferably 5.5 parts by mass or more, and, for example, 15.0 parts by mass or less, preferably 10.0 parts by mass or less, more preferably 9.0 parts by mass or less.

In the chain extending step, the method of allowing the isocyanate group-terminated prepolymer to react with the low molecular-weight polyol is not especially limited. Examples of the reaction method include the above-described bulk polymerization and the above-described solution polymerization.

In this manner, a thermoplastic polyurethane resin is produced as a reaction product of the isocyanate group-terminated prepolymer and the low molecular-weight polyol.

In the chain extending step, as necessary, a known urethane-forming catalyst may be mixed. The mixing ratio of the urethane-forming catalyst is appropriately set depending on the purpose and use.

As necessary, the thermoplastic polyurethane resin can contain a known additive. Examples of the additive include an antioxidant, a heat-resistant stabilizer, an ultraviolet absorber, a light-resistant stabilizer, and further include a dehydrating agent, a dye, a plasticizer, an antiblocking agent, a surface modifier, a lubricant, a mold release agent, a pigment, a filler, a corrosion inhibitor, and a filler. These can be used alone or in combination of two or more. The adding amount of the additive and the timing of adding thereof are appropriately set depending on the purpose and use.

As necessary, the thermoplastic polyurethane resin is subjected to an aging treatment (aging step). In the aging step, the above-described thermoplastic polyurethane resin (yet to be aged) is subjected to an aging treatment. In this manner, an aged product of the thermoplastic polyurethane resin is produced.

The aging temperature is, for example, 50°C or more, preferably 60°C or more, more preferably 70°C or more. Furthermore, the aging temperature is, for example, 100°C or less, preferably 90°C or less. The aging time is, for example, 3 days or more, preferably 4 days or more, more preferably 5 days or more, even more preferably 6 days or more. Furthermore, the aging time is, for example, 10 days or less, preferably 9 days or less, more preferably 8 days or less.

In view of the heat resistance, the thermoplastic polyurethane resin has a hard segment concentration of, for example, 18% by mass or more, preferably 20% by mass or more, more preferably 22% by mass or more.

Furthermore, in view of the stretchability, the thermoplastic polyurethane resin has a hard segment concentration of, for example, 35% by mass or less, preferably 30% by mass or less, more preferably 25% by mass or less.

When the hard segment concentration of the thermoplastic polyurethane resin is in the above-described range, finger mark rebound resilience and heat resistance can particularly preferably be achieved simultaneously.

In other words, in the above-described thermoplastic polyurethane resin, the polyisocyanate component contains a 1,4-bis(isocyanatomethyl) cyclohexane and a 1,3-bis(isocyanatomethyl) cyclohexane. The crystallinity of the 1,3-bis(isocyanatomethyl) cyclohexane is lower than that of the 1,4-bis(isocyanatomethyl) cyclohexane. Therefore, when the polyisocyanate component contains a 1,4-bis(isocyanatomethyl) cyclohexane and a 1,3-bis(isocyanatomethyl) cyclohexane, the crystallinity of the thermoplastic polyurethane resin is relatively low as compared with when the polyisocyanate component only contains a 1,4-bis(isocyanatomethyl) cyclohexane. As a result, the thermoplastic polyurethane resin has excellent finger mark rebound resilience. On the other hand, when the crystallinity of the thermoplastic polyurethane resin is relatively low, the heat resistance of the thermoplastic polyurethane resin may be reduced. In such a case, when the hard segment concentration is adjusted in a predetermined range, the reduction in heat resistance of the thermoplastic polyurethane resin is suppressed. That is to say, when the hard segment concentration is in the above-described range, the thermoplastic polyurethane resin can particularly preferably have finger mark rebound resilience and heat resistance simultaneously.

The concentration of the hard segment (formed by the reaction between the polyisocyanate component and the low molecular-weight polyol) can be calculated, for example, from the mixing ratio (charge) of each component of the thermoplastic polyurethane resin by a known method.

More specifically, for example, when a prepolymer method is used, the hard segment concentration can be calculated from the mixing ratio (charge) of each component according to the next formula.[Low Molecular-weight Polyol (g) + (Low Molecular-weight Polyol (g)/Molecular Weight of Low Molecular-weight polyol (g/mol)) × Average Molecular Weight of Polyisocyanate Component (g/mol)] ÷ (Total Mass of Polyisocyanate Component (g) + Polyol Component (g)) ×100

Furthermore, the raw material component of the above-described thermoplastic polyurethane resin contains the 1,4-bis(isocyanatomethyl) cyclohexane in a predetermined ratio, the crystalline polycarbonate polyol, and the polyol component containing the low molecular-weight polyol.

The 1,4-bis(isocyanatomethyl) cyclohexane has a relatively high crystallinity. Furthermore, the low molecular-weight polyol forms hard segments and improves the crystallinity. Furthermore, the crystalline polycarbonate polyol has a relatively high crystallinity.

Furthermore, the raw material component contains a 1,3-bis(isocyanatomethyl) cyclohexane. The 1,3-bis(isocyanatomethyl) cyclohexane has a relatively low crystallinity.

Then, in the raw material component, the ratio of the 1,4-bis(isocyanatomethyl) cyclohexane to the 1,3-bis(isocyanatomethyl) cyclohexane is adjusted in a predetermined range.

In other words, the crystallinity of the polyurethane structure is adjusted by the raw material component. In this manner, the thermoplastic polyurethane resin has stretchability (restoring force), heat resistance, and finger mark rebound resilience in a good balance therebetween.

Furthermore, when the crystallinity of the polyurethane structure is adjusted as described above, the thermoplastic polyurethane resin also has excellent anti-blooming property and excellent melting property.

Therefore, the above-described thermoplastic polyurethane resin is preferably used in the production of various molded products. That is to say, the above-described thermoplastic polyurethane resin is molded by a known molding method to produce a molded product containing the thermoplastic polyurethane resin.

Examples of the molding method include thermal compression molding, injection molding, extrusion molding, cut molding, melt-spinning molding, and 3D printing molding. These can be used alone or in combination of two or more.

As the molding method, preferably, extrusion molding is used. In extrusion molding, for example, first, the thermoplastic polyurethane resin is primarily molded to produce pellets of the thermoplastic polyurethane resin.

Next, the pellets of the thermoplastic polyurethane resin are secondarily molded to produce a desired molded product.

Examples of the shape of the molded product include a film shape, a sheet shape, a board shape, a fiber shape, a strand shape, a pipe shape, a hollowed shape, and a box shape. These can be used alone or in combination of two or more. The shape of the molded product is preferably a film shape.

In other words, as the molded product, preferably, a film containing the thermoplastic polyurethane resin is produced. Such a film contains the above-described thermoplastic polyurethane resin, and thus has finger mark rebound resilience, stretchability (restoring force), and heat resistance in a good balance therebetween.

Therefore, the above-described film can preferably be used in a field which requires the above-described physical properties. More specifically, the above-described film can preferably be used, for example, as the base films of various protection films. The protection film is not especially limited, and examples thereof include a paint protection film (Paint Protection Film (PPF)), a protection film of the interior of a vehicle, a protection film of a blade for wind power generation, and a protection film of a glass. The above-described film is preferably used as a paint protection film. The paint protection film is used for protecting the paint surfaces of various products in various industrial fields, such as the vehicle industry.

More specifically, the paint protection film (PPF) is attached to the paint surfaces of various products (for example, automobiles and motorcycles). In this manner, the paint protection film protects the surfaces of various products.

The paint protection film (PPF) includes at least a film containing the above-described thermoplastic polyurethane resin. For example, the paint protection film (PPF) is a laminate film and includes a peelable layer, a pressure-sensitive adhesive layer disposed at least on a one-side surface of the peelable layer, and a base film layer disposed at least on a one-side surface of the pressure-sensitive adhesive layer. More specifically, the paint protection film (PPF) includes, for example, a peelable layer containing the polyester resin, an acrylic pressure-sensitive adhesive layer disposed on the peelable layer, and a base film layer disposed on the acrylic pressure-sensitive adhesive layer. Furthermore, the paint protection film (PPF) can further include a surface protecting layer disposed on the base film layer.

Then, the base film layer contains the above-described film. In other words, as the base film layer of the paint protection film (PPF), a film containing the above-described thermoplastic polyurethane resin is used. In this manner, the paint protection film (PPF) has excellent stretchability (restoring force), heat resistance, and finger mark rebound resilience. Therefore, the paint protection film (PPF) can protect various products (such as automobiles and motorcycles) well.

Furthermore, the above-described film (for example, a base film layer) may be colored by an arbitrary method. That is to say, the above-described film (for example, a base film layer) may be a colored film. For example, when the base film layer of a protection film is a colored film, the protection film can protect various products as described above and simultaneously can color them. More specifically, for example, when the base film of a paint protection film used for an automobile is a colored film, the paint protection film can protect the paint surface of the automobile and easily change the color of the body of the automobile simultaneously.

The above-described thermoplastic polyurethane resin, film, and paint protection film can preferably be used in various industrial fields which require stretchability (restoring force), heat resistance, and finger mark rebound resilience. Particularly, the above-described thermoplastic polyurethane resin, film, and paint protection film are preferably used in the field of paint protection for protecting the paint surfaces of vehicles (for example, automobiles and motorcycles).

### Examples

Next, the present invention is described based on Examples and Comparative Examples. The present invention is, however, not limited to them. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

### 1) Raw Material

### <Polyisocyanate Component (a)>

1,4-H₆XDI: 1,4-bis(isocyanatomethyl) cyclohexane produced in accordance with the description of Production Example 3 in WO2019/069802. Trans-isomer 86 mol%, Cis-isomer 14 mol%.

1,3-H₆XDI: 1,3-bis(isocyanatomethyl) cyclohexane, Trade name TAKENATE 600, Manufactured by Mitsui Chemicals, Inc.

### <Macropolyol (b)>

b-1) PCD1000: Number average molecular weight (Mn) 1000, Crystallin polycarbonate diol, Trade name ETERNACOLL UH-100W, Average number of hydroxyl groups 2, Manufactured by UBE Corporation
b-2) PCD2000: Number average molecular weight (Mn) 2000, Crystallin polycarbonate diol, Trade name ETERNACOLL UH-200W, Average number of hydroxyl groups 2, Manufactured by UBE Corporation
b-3) Liquid PCD1000: Number average molecular weight (Mn) 1000, Amorphous polycaproctone diol, Trade name ETERNACOLL UP-100, Average number of hydroxyl groups 2, Manufactured by UBE Corporation
b-4) Liquid PCD2000: Number average molecular weight (Mn) 2000, Amorphous polycaproctone diol, trade name ETERNACOLL UP-200, Average number of hydroxyl groups 2, Manufactured by UBE Corporation
b-5) PCL1000: Number average molecular weight (Mn) 1000, Polycaprolactone diol, Trade name PLACCEL 210N, Average number of hydroxyl groups 2, Manufactured by Daicel Corporation
b-6) PCL2000: Number average molecular weight (Mn) 2000, Polycaprolactone diol, Trade name PLACCEL 220N, Average number of hydroxyl groups 2, Manufactured by Daicel Corporation

### <Low molecular-weight Polyol (c)>

1,4-BD: 1, 4-butanediol, Manufactured by Mitsui Chemicals, Inc.

### 2) Thermoplastic Polyurethane Resin

### Examples 1 to 14 and Comparative Examples 1 to 14

In accordance with the formulations described in Tables 1 to 4, a thermoplastic polyurethane resin and a sheet were produced.

More specifically, a macropolyol (b) pre-heated to 80°C was measured. The macropolyol (b) was stirred in an oil bath at 80°C under nitrogen atmosphere for 1 hour. Next, the following additives were added to the macropolyol (b), and the mixture was stirred in an oil bath at 80°C under nitrogen atmosphere for 1 hour.
Irganox 245 (manufactured by BASF Heat-resistant stabilizer) 0.3 parts by mass
Tinuvin 571 (manufactured by BASF Ultraviolet absorber) 0.4 parts by mass
ADK STAB LA-72 (manufactured by ADEKA CORPORATION HALS) 0.1 parts by mass
(hereinabove, the ratio with respect to 100 parts by mass of the total amount of the polyisocyanate component, macropolyol, and low molecular-weight polyol)

Next, in a ratio described in Tables 1 to 4, a polyisocyanate component (a) was added to the mixture of the macropolyol (b) and the additives. Furthermore, a solution of tin octylate (solvent; diisononyl adipate, concentration; 4% by mass) as a urethane-forming catalyst was added in a ratio of 5ppm to the mixture. Next, the mixture was stirred and mixed in an oil bath at 80°C for 5 minutes and reacted. In this manner, an isocyanate group-terminated prepolymer was produced (prepolymer synthesizing step).

Next, a low molecular-weight polyol (c) pre-heated to 80°C was added to the isocyanate group-terminated prepolymer, and the mixture was stirred and mixed for 3 to 20 minutes.

The adding amount of the low molecular-weight polyol (c) was adjusted so that the equivalent ratio (isocyanate group/hydroxyl group) of the isocyanate group in the isocyanate group-terminated prepolymer was 1.00 with respect to the hydroxyl group in the low molecular-weight polyol (c). Furthermore, while the rate of heat release was being observed, the above-described solution of tin octylate was appropriately added thereto.

Next, the reaction mixture was poured into a Teflon (registered trademark) vat pre-heated to 150°C, and reacted at 150°C for 2 hours, furthermore, reacted at 100°C for 20 hours (chain extending step). In this manner, a thermoplastic polyurethane resin was produced.

Next, the thermoplastic polyurethane resin (yet to be aged) was taken out thereof and cut into cubes with a bale cutter. Next, the cube-shaped thermoplastic polyurethane resin was ground with a grinder. In this manner, ground pellets were produced.

Next, the ground pellets were aged in an 80°C oven for 7 days and dried at 23°C under vacuum reduced pressure for 12 hours. In this manner, an aged product of the thermoplastic polyurethane resin was produced.

Thereafter, the aged product of the thermoplastic polyurethane resin was molded with a single screw extruder (Model: SZW40-28MG, manufactured by TECHNOVEL CORPORATION), thereby producing pellets (primary molded product). The screw rotation speed of the extruder was 30 rpm, and the cylinder temperature was 150°C to 250°C. The pellets of the thermoplastic polyurethane resin were dried at 80°C under vacuum reduced pressure for 12 hours.

Thereafter, the above-described pellets were molded with a single screw extruder (Model: SZW40-28MG, manufactured by TECHNOVEL CORPORATION), thereby producing a film (secondary molded product). The screw rotation speed of the extruder was 20 rpm, and the cylinder temperature was 150°C to 250°C. The film of the thermoplastic polyurethane resin was used for the evaluation tests below.

Furthermore, the hard segment concentration of the thermoplastic polyurethane resin was calculated according to the following formula. [Low Molecular-weight Polyol (g) + (Low Molecular-weight Polyol (g)/Molecular Weight of Low molecular-weight Polyol (g/mol)) × Average Molecular Weight of Polyisocyanate Component (g/mol)] = (Total Mass of Polyisocyanate Component (g) + Polyol Component (g)) × 100

### 4) Evaluations

### <Hardness (Shore A)>

The Shore A hardness of the film of the thermoplastic polyurethane resin was measured in conformity with JIS K 7312 (1996).

### <Stretchability: Restoration Rate (Shape Restoration Rate)>

The film of the thermoplastic polyurethane resin was set in a universal testing machine Model 205N (manufactured by INTESCO co., ltd., the distance between gauge lines 80mm, the tensile rate 500 ml/min), the distance between gauge lines was extended by 60% (48 mm), and thereafter the film was released.

15 seconds later from the release, the distance between gauge lines was measured, the restoration rate of the film was measured. The restoration rate of the film is the ratio (%) of the length of the film before the extension to the length of the film after the extension. The higher (the nearer to100%) the restoration rate of the film is, the higher the restoration rate (the shape restoration rate) is.

The criteria of the evaluation of the stretchability are shown below.
⊚: The restoration rate was 98.5% or more.
∘: The restoration rate was 97.5% or more and less than 98.5%.
△: The restoration rate was 97.0% or more and less than 97.5%.
×: The restoration rate was less than 97.0%.

### <Finger Mark Rebound>

A 20-mm diameter center punch is put onto the surface of the film of the thermoplastic polyurethane resin, and the punch was pushed out by 14 mm in a direction toward the film to convexly deform the film. Thereafter, the film was released from the punch. 10 minutes later, the height of the convex portion (punch mark) of the film was measured.

Furthermore, the residual ratio of the convex portion of the film was calculated. The residual ratio of the convex portion is the ratio (%) of the height of the convex portion after the release to the height of the convex portion before the release. The lower (the nearer to 0%) the residual ratio of the convex portion is, the higher the finger mark rebound is.

The criteria of the evaluation of the finger mark rebound are shown below.
⊚: The residual ratio of the convex portion was less than 10%.
∘: The residual ratio of the convex portion was 10% or more and less than 17%.
△: The residual ratio of the convex portion was 17% or more and less than 19%.
×: The residual ratio of the convex portion was 19% or more.

### <Heat Resistance: Storage Elastic Modulus (E')>

The dynamic viscoelasticity spectrum of the film of the thermoplastic polyurethane resin was measured using a dynamic viscoelastic analyzer (manufactured by IT Sokuryo Seigyo Co., Ltd., Model: DVA-220) under the conditions of a measurement temperature of -100°C to 250°C, a rate of temperature increase of 5°C/min, a tensile mode, a length between gauge lines of 20 mm, a static/dynamic stress ratio of 1.8, and a measurement frequency of 10Hz.

Then, the storage elastic modulus E' at 80°C was measured. The higher the E' was, the more excellent, the heat resistance was.

The criteria of the evaluation of the heat resistance are shown below.
⊚: The storage elastic modulus E' (80°C) was 20×10⁶ MPa or more.
∘: The storage elastic modulus E' (80°C) was 10×10⁶ MPa or more and less than 20×10⁶ MPa.
×: The storage elastic modulus E' (80°C) was less than 10×10⁶ MPa.

### <Anti-blooming Property>

The film of the thermoplastic polyurethane resin was preserved at 30°C and a relative humidity of 80% for 35 days. Thereafter, the haze of the film was measured with HAZE METER NDH-5000 (manufactured by NIPPON DENSHOKU INDUSTRIES CO., LTD.).

### <Melting Enthalpy (Unit: J/g)>

Using a differential scanning calorimeter (DSC7000X, manufactured by Hitachi High-Tech Science Corporation), the measurement was carried out as follows.

That is to say, approximately 10 mg of the thermoplastic polyurethane resin was collected in an aluminum pan. The aluminum pan was covered and crimped, and used as a measurement specimen (sample). Alumina was collected in the same manner, and used as a reference specimen.

The sample and reference were set at a predetermined position in a cell, and thereafter the specimen was cooled from 20°C to -100°C at a rate of 10 °C/min under a nitrogen gas stream at a flow rate of 30 NmL/min, and then maintained at the same temperature for 5 minutes, and thereafter the temperature was raised to 270°C at a rate of 10°C/min, and subsequently cooled to -70°C at a rate of 10°C/min.

Then, among the peaks that appeared during the increase in temperature from -100°C to 270°C, the peak temperature of the heat absorption peak (melting peak) at 160°C or more, and the amount of heat of the peak (enthalpy change) (J/g) were measured.

### [Table 1]

**Table 1**

| No. | | | Comp. Ex. 1 | Comp. Ex. 2 | Comp. Ex. 3 | Comp. Ex. 4 | Ex. 1 | Ex. 2 | Ex. 3 | Ex. 4 |
|---|---|---|---|---|---|---|---|---|---|---|
| Mixing ratio (mol%) | Polyisocyanate component (a) | 1,4-H6XDI | 100 | 100 | 100 | 100 | 70 | 70 | 70 | 90 |
| | | 1,3-H6XDI | - | - | - | - | 30 | 30 | 30 | 10 |
| | Macropolyol (b) | PCD1000 | 21 | 20 | - | - | 17 | 14 | 21 | 18 |
| | | PCD2000 | 21 | - | - | - | 17 | 14 | 21 | 18 |
| | | Liquid PCD1000 | - | - | 21 | 49 | - | - | - | - |
| | | Liquid PCD2000 | - | 20 | 21 | - | - | - | - | - |
| | | PCL1000 | - | - | - | - | - | - | - | - |
| | | PCL2000 | - | - | - | - | - | - | - | - |
| | Low molecular-weight polyol (c) | 1,4-BD | 58 | 60 | 58 | 51 | 66 | 28 | 58 | 64 |
| Equivalent ratio (NCO/OH) | Prepolymer synthesizing step | | 2.38 | 2.50 | 2.38 | 2.04 | 2.94 | 3.57 | 2.38 | 2.78 |
| | Chain extending step | | 1.00 | 1.00 | 1.00 | 1.00 | 1.00 | 1.00 | 1.00 | 1.00 |
| Hard segment concentration (% by mass) | | | 18 | 20 | 19 | 20 | 25 | 30 | 18 | 22 |
| Evaluations | Hardness | shoreA | 90 | 92 | 92 | 90 | 88 | 92 | 82 | 90 |
| | Stretchability | Restoration rate (%) | 98.2 | 97.9 | 97.6 | 97.3 | 98.5 | 97.8 | 98.9 | 98.3 |
| | | Evaluations | ○ | ○ | ○ | △ | ⊚ | ○ | ⊚ | ○ |
| | Finger mark rebound | Residual ratio of convex portion (%) | 22 | 20 | 20 | 19 | 12 | 13 | 12 | 17 |
| | | Evaluations | × | × | × | × | ○ | ○ | ○ | △ |
| | Heat resistance | E'(80'C) 10⁶(MPa) | 21 | 21 | 21 | 12 | 13 | 16 | 10 | 15 |
| | | Evaluations | ⊚ | ⊚ | ○ | ○ | ○ | ○ | ○ | ○ |
| | Anti-blooming property | Haze(%) | - | - | - | 3.3 | - | - | - | - |
| | Melting property | Melting peak | 173 | - | 192 | 176 | 156 | 161 | 148 | - |
| | | Enthalpy (J/g) | 13 | - | 3 | 10 | 9 | 12 | 4 | - |

### [Table 2]

**Table 2**

| No. | | | Ex. 5 | Ex. 6 | Ex. 7 | Ex. 8 | Ex. 9 | Ex. 10 | Comp. Ex. 5 |
|---|---|---|---|---|---|---|---|---|---|
| Mixing ratio (mol%) | Polyisocyanate component (a) | 1,4-H6XDI | 85 | 85 | 77 | 77 | 50 | 50 | 40 |
| | | 1,3-H6XDI | 15 | 15 | 23 | 23 | 50 | 50 | 60 |
| | Macropolyol (b) | PCD1000 | 21 | 17 | 20 | 17 | 14 | 12 | 10 |
| | | PCD2000 | 21 | 17 | 20 | 17 | 14 | 12 | 10 |
| | | Liquid PCD1000 | - | - | - | - | - | - | - |
| | | Liquid PCD2000 | - | - | - | - | - | - | - |
| | | PCL1000 | - | - | - | - | - | - | - |
| | | PCL2000 | - | - | - | - | - | - | - |
| | Low molecular-weight polyol (c) | 1,4-BD | 58 | 66 | 60 | 66 | 72 | 76 | 80 |
| Equivalent ratio (NCO/OH) | Prepolymer synthesizing step | | 2.38 | 2.94 | 2.50 | 2.94 | 3.57 | 4.17 | 500 |
| | Chain extending step | | 1.00 | 1.00 | 1.00 | 1.00 | 1.00 | 1.00 | 1.00 |
| Hard segment concentration (% by mass) | | | 18 | 25 | 30 | 25 | 30 | 35 | 40 |
| Evaluations | Hardness | shoreA | 85 | 90 | 92 | 88 | 86 | 91 | 90 |
| | Stretchability | Restoration rate (%) | 98.6 | 98.5 | 98.3 | 98.8 | 98.1 | 97.0 | 96.7 |
| | | Evaluations | ⊚ | ⊚ | ○ | ○ | ○ | △ | × |
| | Finger mark rebound | Residual ratio of convex portion (%) | 13 | 14 | 14 | 12 | 16 | 17 | 20 |
| | | Evaluations | ○ | ○ | ○ | ○ | ○ | △ | × |
| | Heat resistance | E'(80°C) 10⁶(MPa) | 13 | 16 | 18 | 13 | 11 | 12 | 9 |
| | | Evaluations | ○ | ○ | ○ | ○ | ○ | ○ | × |
| | Anti-blooming property | Haze(%) | - | - | - | - | - | - | - |
| | Melting property | Melting peak | 154 | 172.5 | 174.2 | 164 | 138.2 | 142 | - |
| | | Enthalpy (J/g) | 8 | 15 | 14 | 9 | 3 | 12 | - |

### [Table 3]

**Table 3**

| No. | | | Ex. 11 | Ex. 12 | Comp. Ex. 6 | Ex. 13 | Ex. 14 | Comp. Ex. 7 |
|---|---|---|---|---|---|---|---|---|
| Mixing ratio (mol%) | Polyisocyanate component (a) | 1,4-H6XDI | 70 | 70 | 70 | 70 | 70 | 70 |
| | | 1,3-H6XDI | 30 | 30 | 30 | 30 | 30 | 30 |
| | Macropolyol (b) | PCD1000 | 38 | 30 | - | - | 14 | - |
| | | PCD2000 | - | - | - | 20 | - | - |
| | | Liquid PCD1000 | - | - | 19 | 10 | - | 36 |
| | | Liquid PCD2000 | - | - | 12 | - | 14 | - |
| | | PCL1000 | - | - | - | - | - | - |
| | | PCL2000 | - | - | - | - | - | - |
| | Low molecular-weight polyol (c) | 1,4-BD | 62 | 69 | 69 | 70 | 72 | 64 |
| Equivalent ratio (NCO/OH) | Prepolymer synthesizing step | | 2.63 | 3.28 | 3.22 | 3.33 | 3.57 | 2.78 |
| | Chain extending step | | 1.00 | 1.00 | 1.00 | 1.00 | 1.00 | 1.00 |
| Hard segment concentration (% by mass) | | | 28 | 35 | 25 | 30 | 30 | 30 |
| Evaluations | Hardness | shoreA | 90 | 95 | 88 | 91 | 91 | 94 |
| | Stretchability | Restoration rate (%) | 97.9 | 97.5 | 98.1 | 97.8 | 97.8 | 97.1 |
| | | Evaluations | ○ | ○ | ○ | ○ | ○ | △ |
| | Finger mark rebound | Residual ratio of convex portion (%) | 14 | 17 | 16 | 14 | 13 | 8 |
| | | Evaluations | ○ | △ | ○ | ○ | ○ | ⊚ |
| | Heat resistance | E'(80°C) 10⁶(MPa) | 16 | 12 | 9 | 14 | 13 | 8 |
| | | Evaluations | ○ | ○ | × | ○ | ○ | × |
| | Anti-blooming property | Haze(%) | 1.1 | - | 1.2 | - | - | 1.0 |
| | Melting property | Melting peak | 150 | 92 | 155 | 165 | 166 | 152 |
| | | Enthalpy (J/g) | 9 | 12 | 5 | 15 | 14 | 17 |

### [Table 4]

**Table 4**

| No. | | | Comp. Ex. 8 | Comp. Ex. 9 | Comp. Ex. 10 | Comp. Ex. 11 | Comp. Ex. 12 |
|---|---|---|---|---|---|---|---|
| Mixing ratio (mol%) | Polyisocyanate component (a) | 1,4-H6XDI | 70 | 70 | 100 | 100 | 100 |
| | | 1,3-H6XDI | 30 | 30 | - | - | - |
| | Macropolyol (b) | PCD1000 | - | - | - | - | - |
| | | PCD2000 | - | - | - | - | - |
| | | Liquid PCD1000 | - | - | - | - | - |
| | | Liquid PCD2000 | - | - | - | - | - |
| | | PCL1000 | 35 | - | 33 | 46 | - |
| | | PCL2000 | - | 19 | - | - | 28 |
| | Low molecular-weight polyol (c) | 1,4-BD | 65 | 81 | 67 | 54 | 72 |
| Equivalent ratio (NCO/OH) | Prepolymer synthesizing step | | 2.86 | 5.26 | 3.00 | 2.17 | 3.57 |
| | Chain extending step | | 1.00 | 1.00 | 1.00 | 1.00 | 1.00 |
| Hard segment concentration (% by mass) | | | 30 | 35 | 32 | 22 | 25 |
| Evaluations | Hardness | shoreA | 90 | 91 | 95 | 90 | 90 |
| | Stretchability | Restoration rate (%) | 97.1 | 97.1 | 94.5 | 95.2 | 95.0 |
| | | Evaluations | △ | △ | × | × | × |
| | Finger mark rebound | Residual ratio of convex portion (%) | 26 | 21 | - | - | - |
| | | Evaluations | × | × | - | - | - |
| | Heat resistance | E'(80°C) 10⁶(MPa) | 13 | 25 | 52 | 24 | 28 |
| | | Evaluations | ○ | ⊚ | ○ | ○ | ○ |
| | Anti-blooming property | Haze(%) | - | - | - | - | - |
| | Melting property | Melting peak | 152 | 176.3 | 188 | 168 | 182 |
| | | Enthalpy (J/g) | 13 | 19 | 20 | 12 | 16 |

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The thermoplastic polyurethane resin, film, and paint protection film of the present invention are preferably used in the field of paint protection for protecting the paint surfaces of vehicles.

## Claims

1. A thermoplastic polyurethane resin comprising:
a reaction product of a polyisocyanate component and a polyol component, wherein the polyisocyanate component contains:
a 1,4-bis(isocyanatomethyl)cyclohexane, and
a 1,3-bis(isocyanatomethyl) cyclohexane,
wherein the polyol component contains a polycarbonate polyol and a low molecular-weight polyol,
wherein the polycarbonate polyol includes a crystalline polycarbonate polyol that is in a solid state at 25°C,
wherein with respect to a total amount of the 1,4-bis(isocyanatomethyl) cyclohexane and the 1,3-bis(isocyanatomethyl) cyclohexane,
a ratio of the 1,4-bis(isocyanatomethyl) cyclohexane is 50 mol% or more and 90 mol% or less, and
a ratio of the 1,3-bis(isocyanatomethyl) cyclohexane is 10 mol% or more and 50 mol% or less.

2. The thermoplastic polyurethane resin according to claim 1,
wherein the polycarbonate polyol consists of the crystalline polycarbonate polyol.

3. The thermoplastic polyurethane resin according to claim 1,
wherein the thermoplastic polyurethane resin has a hard segment concentration of 18% by mass or more and 35% by mass or less.

4. The thermoplastic polyurethane resin according to claim 1,
wherein the polycarbonate polyol contains:
a first polycarbonate polyol having a number average molecular weight of 1200 or less, and
a second polycarbonate polyol having a number average molecular weight of 1800 or more.

5. A film comprising: the thermoplastic polyurethane resin compound according to claim 1.

6. A paint protection film comprising:
a peelable layer;
a pressure-sensitive adhesive layer disposed at least on a one-side surface of the peelable layer; and
a base film layer disposed at least on a one-side surface of the pressure-sensitive adhesive layer,
wherein the base film layer contains the film according to claim 5.
